# EUROPEAN PATENT APPLICATION

(11) **EP 3 098 091 A1**
(43) Date of publication of application: **30.11.2016**
(21) Application number: 15741087.9
(22) Date of filing: 20.01.2015
(51) Int. Cl.: B60C 23/04, G01L 17/00

(54) **TIRE-VALVE ID REGISTRATION SYSTEM**

(30) Priority: 23.01.2014 JP 2014010775
(71) Applicant: Kabushiki Kaisha Tokai Rika Denki Seisakusho, Ohguchi-cho Niwa-gun Aichi 480-0195 (JP)
(72) Inventor: TSUCHIKAWA, Yuta, Niwa-gun Aichi 480-0195 (JP); SHIBATA, Yasuhiro, Niwa-gun Aichi 480-0195 (JP)
(74) Representative: TBK
(86) International application number: PCT/JP2015/051382
(87) International publication number: WO 2015/111573

(57) **Abstract**

This tire-valve ID registration system is equipped with a plurality of tire valves (4) and a receiver (12). Each of the tire valves transmits a radio wave (Sva) including a unique valve ID and tire-air-pressure data. The receiver monitors the air pressure of each tire by registering the valve ID upon receiving the radio wave transmitted by each of the tire valves. Each of the tire valves selectively executes one of a plurality of radio-wave transmission modes according to whether the vehicle is moving or stopped. The receiver includes a mode-prediction unit (19) for monitoring whether the vehicle is moving or stopped, and predicting the current radio-wave transmission mode of the tire valves; and an ID registration unit (20) for handling a valve ID transmitted from a tire valve in a radio-wave transmission mode that matches the radio-wave transmission mode predicted by the mode prediction unit as the valve ID of the vehicle, and registering the same in the receiver.

## Description

### TECHNICAL FIELD

The present invention relates to a tire valve ID registration system that registers an ID of a tire valve to a receiver as an ID of a vehicle tire.

### BACKGROUND ART

A conventional tire pressure monitoring system registers a tire ID of a vehicle tire. Patent Document 1 discloses an example of a tire valve ID registration system that automatically registers a tire valve ID (valve ID) to a receiver as an ID of a vehicle tire without using a trigger generator such as an initiator. When the initiator does not have to be used, the tire valve ID registration system can reduce the number of components mounted on the vehicle when registering a valve ID to the register.

### PRIOR ART DOCUMENT

Patent Document 1: Japanese National Phase Laid-Open Patent Publication No. 2011-527971

### SUMMARY OF THE INVENTION

### PROBLEMS THAT ARE TO BE SOLVED BY THE INVENTION

For example, when the tire valve ID registration system starts to perform a valve ID determination process after the vehicle starts to travel, the tire valve ID registration system needs to complete valve ID registration as quickly as possible. Otherwise, tire pressure monitoring may be impeded.

It is an object of the present invention to provide a tire valve ID registration system that quickly completes the registration of a tire valve ID of a vehicle to a register.

### MEANS FOR SOLVING THE PROBLEM

A tire valve ID registration system according to one aspect of the present invention includes tire valves and a receiver. The tire valves are arranged in tires. The receiver is arranged in a vehicle. Each of the tire valves transmits a radio wave that includes a unique valve ID and tire pressure data. The receiver receives the radio wave transmitted from each of the tire valves and registers the valve ID to monitor pressure of each of the tires. Each of the tire valves selectively executes one of a plurality of radio wave transmission modes in accordance with whether the vehicle is in a traveling state or a still state. The receiver includes a mode estimation unit that monitors whether the vehicle is in a traveling state or a still state and estimates the radio wave transmission mode that the tire valves are currently in. The receiver further includes an ID registration unit that determines that the valve IDs transmitted from the tire valves in one of the radio wave transmission modes estimated by the mode estimation unit are valve IDs of the vehicle and registers the determined valves ID to the receiver.

In the structure of the present invention, the receiver estimates a radio wave transmission mode that is currently being executed by the tire valves of the vehicle and determines that the valve IDs transmitted from the tire valves in compliance with the radio wave transmission mode that conforms to the estimated radio wave transmission mode are the valve IDs of the vehicle. Thus, even when valve IDs are transmitted from other vehicles that surround the vehicle, the valve IDs of the vehicle may be specified and registered to the receiver. This allows the candidates for the valve IDs of the vehicle to be narrowed down quickly. Thus, the valve IDs may be quickly registered to the receiver.

### EFFECT OF THE INVENTION

The present invention may quickly complete the registration of a tire valve ID of a vehicle in a receiver.

### BRIEF DESCRIPTION OF THE DRAWINGS

Fig. 1 is a diagram showing a first embodiment of a tire valve ID registration system.
Fig. 2 is a sequence diagram showing an operation logic of a gravity detector.
Fig. 3 is a sequence diagram showing wave radio transmission modes of a tire valve.
Fig. 4 is a transition diagram showing a shifting process of the wave radio transmission modes of the tire valve.
Fig. 5 is a diagram showing the operation performed by the tire valve when a vehicle is shifted from a still state to a traveling state.
Fig. 6 is a diagram showing the operation performed by the tire valve when a vehicle is shifted from a traveling state to a still state.
Fig. 7 is a diagram showing an operation logic for registering a valve ID of a vehicle to a receiver.
Fig. 8A is a diagram showing the operation performed by the tire valve when the vehicle starts to travel after having been still for a long time.
Fig. 8B is a diagram showing the operation performed by the tire valve when the vehicle starts to travel after having been still for a short time.
Fig. 8C is a diagram showing the operation performed by the tire valve when the vehicle is still.
Fig. 9 is a diagram showing the method for setting a phase time in a second embodiment.

### EMBODIMENTS OF THE INVENTION

### First Embodiment

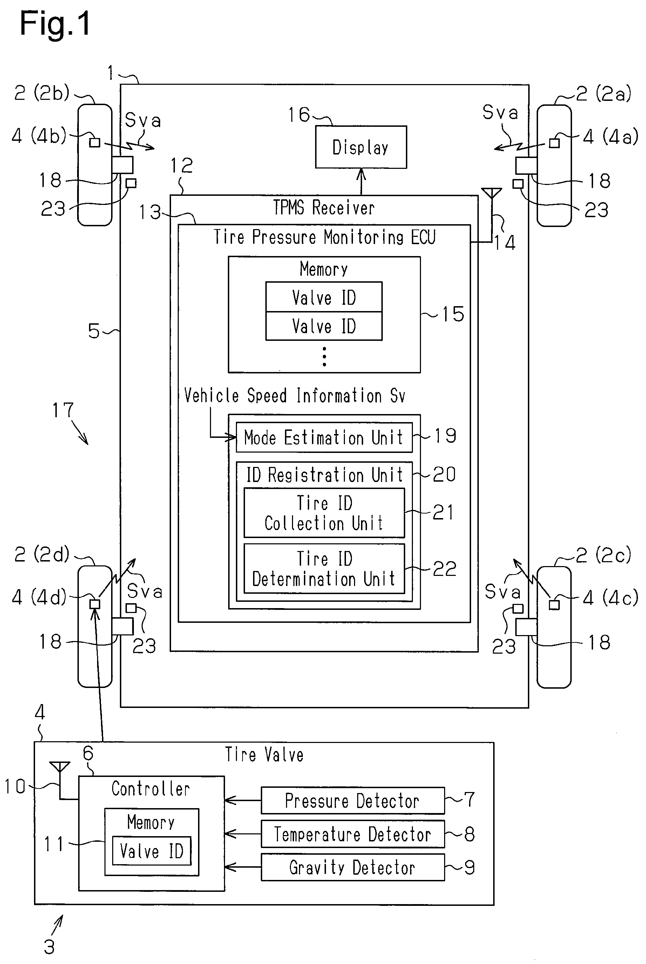

A first embodiment of a tire valve ID registration system will now be described with reference to Figs. 1 to 8.

As shown in Fig. 1, a vehicle 1 includes a tire pressure monitoring system 3 (TPMS) that monitors the air pressure and the like of tires 2 (2a to 2d). The tire pressure monitoring system 3 includes tire valves 4 (4a to 4d), which are respectively coupled to the tires 2a to 2d of the vehicle 1. The tire valves 4 are respectively coupled to air valves of the tires 2. Each of the tire valves 4 serves as a tire valve sensor that includes a sensor and a communication device. Each tire valve 4 of the tire pressure monitoring system 3 transmits, to a receiver 12 arranged in the vehicle 5, a radio wave Sva that includes pressure data of the corresponding tire 2 and an ID that identifies the tire 2. This allows the receiver 12 to monitor the pressure of each of the tires 2a to 2d.

Each of the tire valves 4 includes a controller 6 that controls operation of the tire valve 4, a pressure detector 7 that detects tire pressure, a temperature detector 8 that detects the temperature of the tire 2, a gravity detector 9 that detects the gravitational component that acts on the tire valve 4, and a transmission antenna 10 that is used to transmit a radio wave. The controller 6 includes a memory 11 that stores, as a valve ID, an ID unique to the tire valve 4. The gravity detector 9 is, for example, an acceleration sensor (G-sensor). The transmission antenna 10 transmits a radio wave in, for example, the ultrahigh-frequency (UHF) band.

The receiver 12 of the vehicle 5 serves as a TPMS receiver. The TPMS receiver 12 receives the radio wave Sva from each of the tire valves 4 to monitor the pressure of each of the tires 2. The TPMS receiver 12 includes a tire pressure monitoring electronic control unit (ECU) 13 that controls the operation of the TPMS receiver 12 and a reception antenna 14 that receives a radio wave. The tire pressure monitoring ECU 13 includes a memory 15 that stores a valve ID obtained from each tire valve 4. The TPMS receiver 12 is connected to a display 16 that shows the result of tire pressure monitoring. The display 16 is arranged in, for example, an instrument panel in the passenger compartment.

The TPMS receiver 12 verifies the valve ID of each tire valve 4 when the reception antenna 14 receives the radio wave Sva that is transmitted from each of the tire valves 4a to 4d at a certain time. After verifying the valve ID, the TPMS receiver 12 checks the pressure data of each tire valve 4. When the tire pressure is less than or equal to a low-pressure threshold, the TPMS receiver 12 shows on the display 16 that the tire pressure is low. The TPMS receiver 12 performs such a tire pressure determination whenever receiving the radio wave Sva and sequentially monitors the pressure of each of the tires 2a to 2d.

The tire pressure monitoring system 3 includes a tire valve ID registration system 17 that automatically registers the ID of each tire valve 4 as an ID of the tire 2 corresponding to the vehicle 1. In the tire valve ID registration system 17, the TPMS receiver 12 registers the valve ID of each tire 2 without using a predetermined tool. Further, the TPMS receiver 12 simply registers the valve IDs without identifying coupling positions of the tires 2. The tires 2 subject to registration are not limited to the traveling tires (tires 2a to 2d) and may include spare tires. The traveling tires refer to tires that are coupled to front, rear, left, and right axles 18 of the vehicle 5 and rotate when the vehicle 1 is traveling.

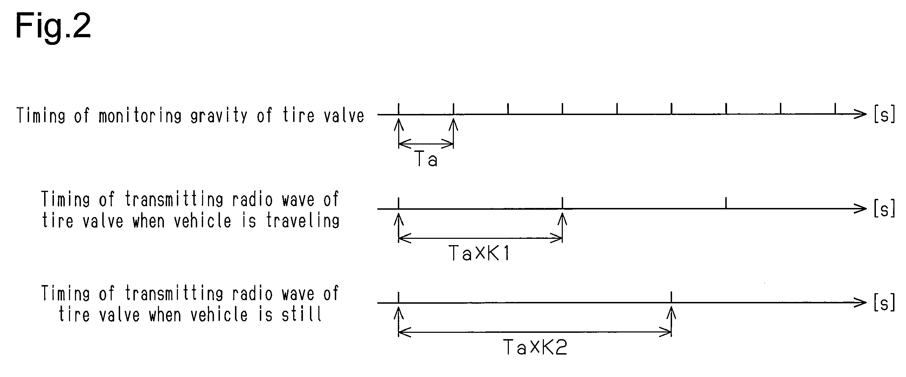

Fig. 2 shows an operation logic of the gravity detector 9. The gravity detector 9 detects a gravitational component (gravity acceleration) that acts on the tire valve 4 in accordance with rotation of the tire 2. The gravity detector 9 generally detects acceleration based on the centrifugal force generated in the tire valve 4 when the tire 2 is rotating. For example, the gravity detector 9 detects a gravitational centripetal component that is applied from the tire valve 4 toward the center of the tire 4 in a radial direction of the tire 4. The tire valve 4 detects whether the vehicle 1 is in a traveling state or a still state based on the gravitation signal detected by the gravity detector 9. Further, the tire valve 4 is capable of detecting a rotation speed of the tire 2, that is, a vehicle speed, based on the gravity signal.

The gravity detector 9 repeatedly detects the gravitational component that acts on the tire valve 4 at a certain monitoring timing. A gravity monitoring interval Ta is, for example, 16 s. The tire valve 4 starts to transmit the radio wave Sva whenever monitoring the gravitational component and transmits the radio wave Sva at a predetermined transmission interval. In the present embodiment, when the vehicle 1 is in a traveling state, the tire valve 4 transmits the radio wave Sva at a transmission interval obtained by multiplying the gravity monitoring interval Ta by a coefficient K1 (Ta × K1). When the vehicle 1 is in a still state, the tire valve 4 transmits the radio wave Sva at a transmission interval obtained by multiplying the gravity monitoring interval Ta by a coefficient K2 (> K1) (Ta × K2). That is, the transmission cycle of the radio wave Sva is longer when the vehicle 1 is traveling than when the vehicle 1 is still. The coefficients K1 and K2 may be variable in accordance with, for example, a vehicle speed or a still time Tst of the vehicle 1.

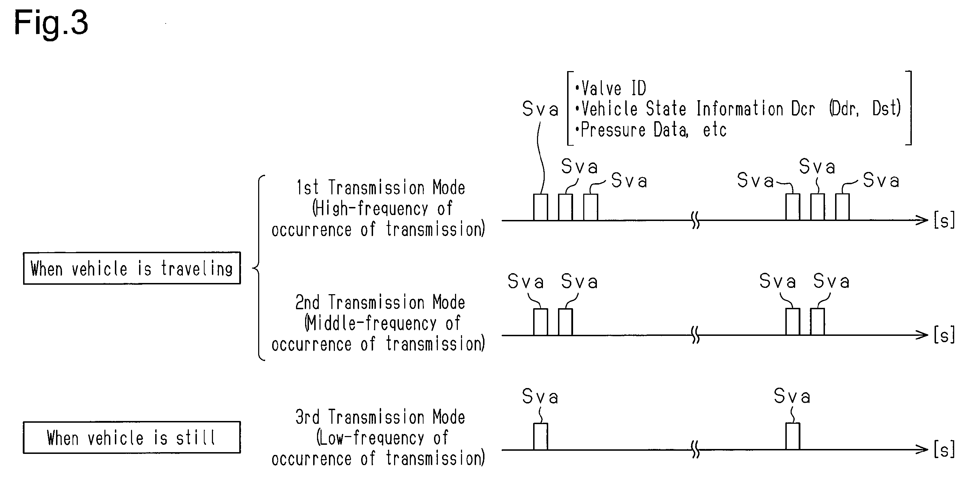

Fig. 3 shows examples of radio wave transmission modes of the tire valves 4. The tire valves 4 selectively execute one of radio wave transmission modes in accordance with the situation of the vehicle 1. The tire valves 4 generally shift the radio wave transmission modes between a traveling state and a still state of the vehicle 1. For example, the tire valves 4 execute a traveling radio wave transmission mode in which a frequency of occurrence of radio wave transmission is high when a vehicle speed of the vehicle 1 corresponds to the traveling state, and the tire valves 4 execute a still radio wave transmission mode in which a frequency of occurrence of radio wave transmission is low when the vehicle speed of the vehicle 1 corresponds to the still state.

It is preferred that the tire valves 4 select a radio wave transmission mode that is in accordance with the preceding still time Tst when the vehicle 1 is shifted from a still state to a traveling state. For example, in the present embodiment, the radio wave transmission modes of the tire valves 4 include a "first transmission mode" having a high-frequency of occurrence of transmission, a "second transmission mode" having a middle-frequency of occurrence of transmission, and a "third transmission mode" having a low-frequency of occurrence of transmission. The traveling radio wave transmission mode corresponds to the first transmission mode and the second transmission mode, and the still radio wave transmission mode corresponds to the third transmission mode. In the present embodiment, the still state of the vehicle 1 includes at least any one of a "parked state" in which the engine is stopped and the vehicle 1 is not moving, a "stopped state" in which the engine is running but the vehicle 1 is not moving, and a "low-speed traveling state" in which the vehicle 1 is traveling at a low speed (for example, less than 5 km/h). For example, when shifting the still radio wave transmission mode to the traveling radio wave transmission mode, the tire valves 4 select the traveling radio wave transmission mode that is in accordance with the preceding still time Tst and the still radio wave transmission before the vehicle 1 became still.

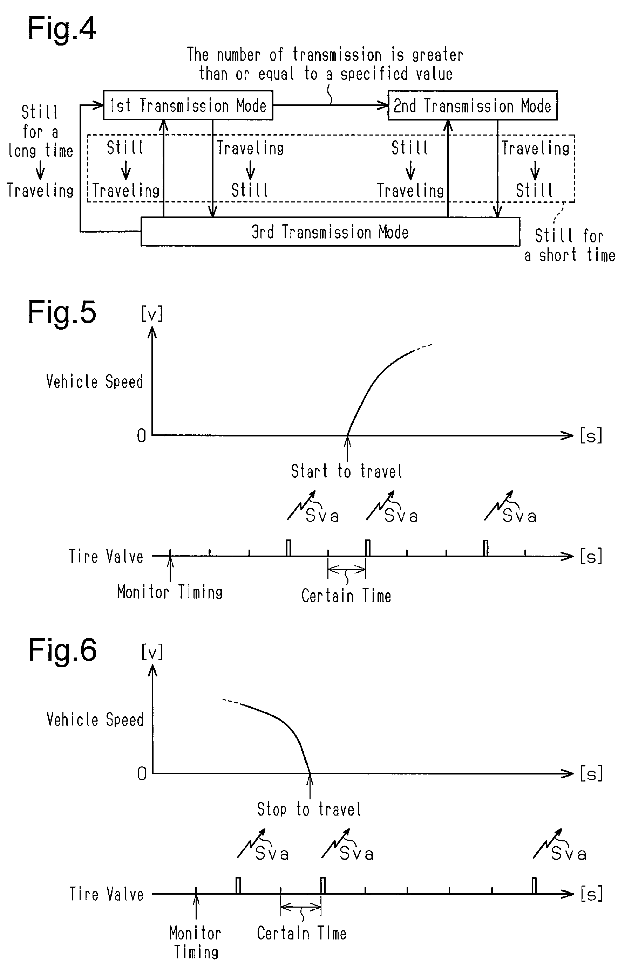

Fig. 4 shows the transition diagram of the tire valves 4. The first transmission mode is executed when the vehicle 1 is shifted from the still state to the traveling state and when the still time Tst is greater than or equal to a predetermined time (for example, fifteen minutes). In the first transmission mode, the number of times the radio wave Sva is transmitted is the largest among the first to third transmission modes, and the tire valves 4 consecutively transmit an M number of radio waves Sva when detecting a gravitational component. The second transmission mode is executed when the number of times the radio waves Sva are transmitted in the first transmission mode reaches a specified value. The number of times the radio waves Sva are transmitted in the second transmission mode is smaller than the number of times the radio waves Sva are transmitted in the first transmission mode. In the second transmission mode, for example, the tire valves 4 consecutively transmit an N (N < M) number of radio waves Sva when detecting a gravitational component. The number of times the radio waves Sva are transmitted in the third transmission mode is smaller than the number of times the radio waves Sva are transmitted in the second transmission mode. In the third transmission mode, for example, the tire valves 4 consecutively transmit an L (L < N, for example, 1) number of radio waves Sva when detecting a gravitational component.

In the present embodiment, the first transmission mode and the third transmission mode are repeated when the traveling radio wave transmission mode before the vehicle 1 becomes still is the first transmission mode and the vehicle 1 repeatedly travels and becomes still frequently. Further, the second transmission mode and the third transmission mode are repeated when the traveling radio wave transmission mode before the vehicle 1 becomes still is the second transmission mode and the vehicle 1 repeatedly travels and becomes still frequently. When the still time Tst is greater than or equal to a predetermined time and the vehicle 1 subsequently shifts to a traveling state, the tire valves 4 reset the number of transmission in the previous first transmission mode and execute the first transmission mode.

Referring to Fig. 3, each of the tire valves 4 determines a traveling state or a still state based on a gravitation signal of the gravity detector 9 and generates vehicle state information Dcr that indicates the determination result. Further, the tire valve 4 transmits the radio wave Sva including the vehicle state information Dcr from the transmission antenna 10. The vehicle state information Dcr indicates a rotation state of the tire 2. It is preferred that the vehicle state information Dcr be included in the radio wave Sva and transmitted with the valve ID and the pressure data. The vehicle state information Dcr includes traveling information Ddr indicating that the vehicle 1 is in a traveling state or still information Dst indicating that the vehicle 1 is in a still state. The traveling information Ddr and the still information Dst each include one or more bits.

Fig. 5 shows the operation of the tire valve 4 when the vehicle 1 is shifted from a still state to a traveling state. In this case, the output of the gravity detector 9 is changed in the first time gravitation monitoring is performed after shifting to the traveling state. Based on the output change of the gravity detector 9, the tire valve 4 recognizes that the vehicle 1 has been shifted to the traveling state and then transmits the radio wave Sva. That is, when the vehicle 1 is shifted from a still state to a traveling state, the tire valve 4 transmits the radio wave Sva within a predetermined time corresponding to the gravitation monitoring interval Ta. In this example, the tire valve 4 performs radio wave transmission whenever monitoring the gravitational component, and the gravitation monitoring interval Ta is set to 16 s. Thus, when the vehicle 1 is shifted from a still state to a traveling state, the tire valve 4 transmits the radio wave Sva within 16 s.

Fig. 6 shows the operation of the tire valve 4 when the vehicle 1 is shifted from a traveling state to a still state. In this case, the output of the gravity detector 9 is changed in the first time gravitation monitoring is performed after shifting to the still state. Based on the output change of the gravity detector 9, the tire valve 4 recognizes that the vehicle 1 has been shifted to the still state and then transmits the radio wave Sva. That is, when the vehicle 1 is shifted from a traveling state to a still state, the tire valve 4 transmits the radio wave Sva within a predetermined time corresponding to the gravitation monitoring interval Ta. In the same manner as described above, the tire valve 4 transmits the radio wave Sva within 16 s.

As shown in Fig. 1, the tire valve ID registration system 17 includes a mode estimation unit 19 that monitors whether the vehicle 1 is in a traveling state or in a still state and estimates the radio wave transmission mode that the tire valve 4 is currently in. The mode estimation unit 19 is arranged in, for example, the tire pressure monitoring ECU 13. The mode estimation unit 19 determines whether the vehicle 1 is in a traveling state or in a still state based on, for example, vehicle speed information Sv that is obtained in the vehicle 1. Further, the mode estimation unit 19 measures the still time Tst of the vehicle 1 and estimates the radio wave transmission mode of the tire valve 4 taking the still time Tst into account. It is preferred that the still time Tst be a total still time that includes the time during which the ignition switch of the vehicle 1 is turned off. For example, the mode estimation unit 19 measures the still time Tst with a counter (not shown) arranged in the tire pressure monitoring ECU 13.

The tire valve ID registration system 17 further includes an ID registration unit 20, which is arranged in, for example, the tire pressure monitoring ECU 13. The ID registration unit 20 determines that the valve IDs transmitted from each tire valve 4 that is operating in the radio wave transmission mode conforming to the radio wave transmission mode estimated by the mode estimation unit 19 are valve IDs of the vehicle 1 and registers the determined valve IDs to the TPMS receiver 12 as the valve ID of the vehicle 1. In the present embodiment, the ID registration unit 20 performs an ID registration process, for example, in phases (process steps) having a predetermined duration. For example, the ID registration unit 20 executes a temporary registration process for collecting a plurality of candidate IDs, which are candidates for valve ID registration, and a formal registration process for narrowing down the candidate IDs to the necessary number (the number of tires 2 of the vehicle 1) and formally registering the valve IDs associated with the tires 2 of vehicle 1. The ID registration unit 20 performs the temporary registration process in the first phase and performs the formal registration process in the next phase. When the formal registration of the valve ID is not completed in a single phase, the ID registration unit 20 repeats the formal registration process in the next phase. Subsequently, the ID registration unit 20 repeats the formal registration process in phases to specify the valve IDs of the vehicle 1 and register the valve IDs to the TPMS receiver 12.

The ID registration unit 20 includes a tire ID collection unit 21 and a tire ID determination unit 22. The tire ID collection unit 21 receives valve IDs from each tire valve 4 of the vehicle 1 and other vehicles (adjacent vehicles) and obtains the received valve IDs as candidate IDs. The tire ID collection unit 21 obtains each valve ID received during, for example, a predetermined time, as the candidate ID. The tire ID determination unit 22 checks whether or not to continue receiving a valve ID that conforms to one of the candidate IDs and then narrows down the valve IDs to be registered among the candidate IDs (ID narrowing process). In this example, the registered valve IDs are the valve IDs of a traveling tire and the valve IDs of a spare tire. When the candidate IDs are narrowed down to the necessary number, the tire ID determination unit 22 determines the narrowed-down valve IDs as being the valve IDs of the vehicle 1.

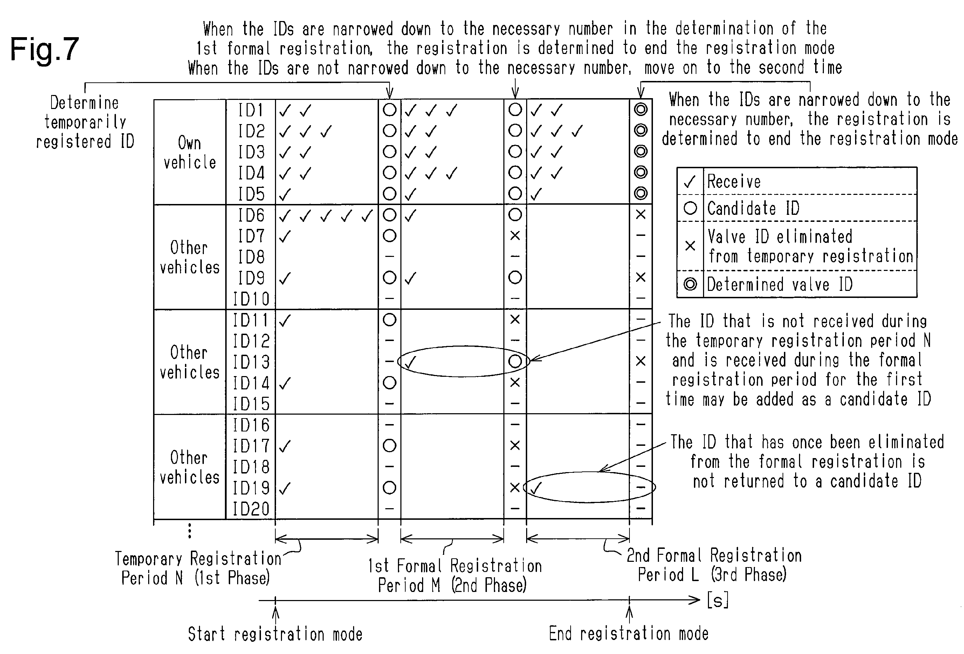

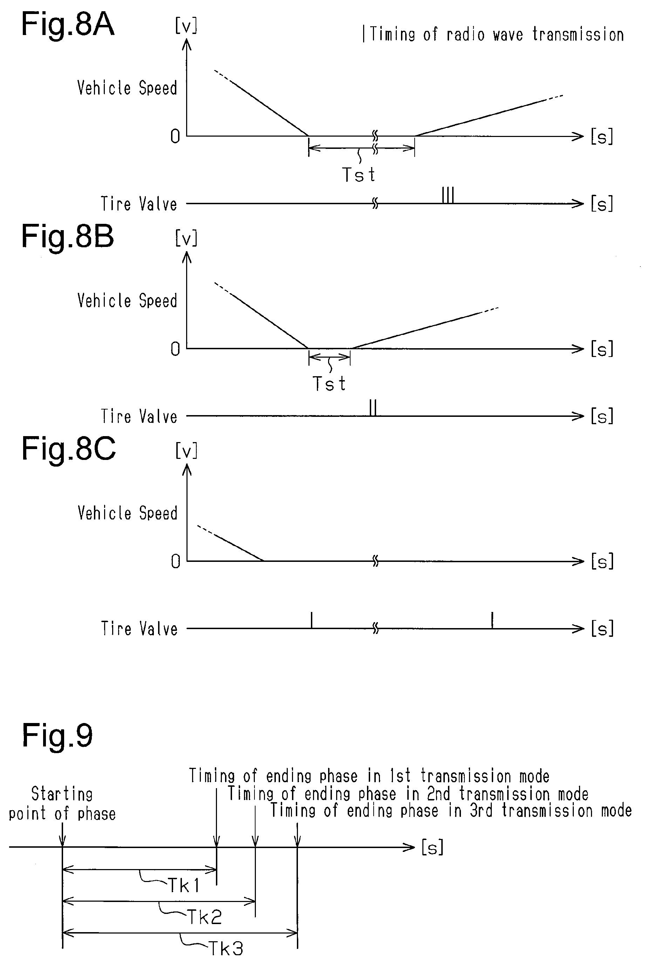

The operation of the tire valve ID registration system 17 will now be described with reference to Figs. 7 and 8.

Fig. 7 shows the operation logic performed when valve IDs of the tires 2 corresponding to the vehicle 1 are registered to the TPMS receiver 12. When a registration mode shifting operation is performed, the TPMS receiver 12 enters a registration mode and starts a valve ID registration operation. First, the tire ID collection unit 21 collects valve IDs from the radio waves Sva received by the reception antenna 14 of the TPMS receiver 12 during a temporary registration period N, which is set to a predetermined time (for example, two minutes). That is, the tire ID collection unit 21 temporarily registers, to the memory 15 of the TPMS receiver 12, valve IDs received during the temporary registration period N, which is a first phase (first process step) of the ID registration operation. The valve IDs collected as registration candidates are stored in the memory 15 together with registration ID flags. It is preferred that the temporary registration period N be set to a duration that allows the radio waves Sva to be received at a high probability that is above a certain theoretical level in accordance with, for example, a radio wave reception ratio of each of the tire valves 4.

Fig. 8A shows a case in which the vehicle 1 starts to travel, for example, after having been still for a long time. As described above, when determining a radio wave transmission mode of the tire valve 4, the mode estimation unit 19 determines whether the vehicle 1 is in a traveling state or in a still state based on the vehicle speed information Sv obtained from the vehicle 1. The vehicle speed information Sv may be regularly obtained as vehicle speed data from, for example, a different on-vehicle ECU that monitors a vehicle speed such as a meter ECU. Alternatively, the vehicle speed information Sv may be obtained from, for example, an axle rotation detector 23. The axle rotation detector 23 detects the amount of rotation of each of the axles 18 to generate a rotation amount detection signal (pulse signal) as the vehicle speed information Sv. The axle rotation detector 23 is, for example, an antilock brake system (ABS). In this case, the TPMS receiver 12 determines the vehicle speed by checking the amount of changes in the number of pulses per unit of time of a pulse signal.

When the vehicle 1 starts to travel after having being still for a long time, the tire valves 4 operate in the first transmission mode and perform radio wave transmission. The mode estimation unit 19 recognizes that the vehicle 1 has been shifted from a still state to a traveling state from the vehicle speed based on the vehicle speed information Sv and recognizes a long still time Tst from the measured value of the counter. Accordingly, the mode estimation unit 19 estimates that the radio wave transmission mode that the tire valves 4 are currently in is the first transmission mode. In this case, among all of the received valve IDs, the ID registration unit 20 determines that the valve IDs received in compliance with the first transmission mode are likely to be the valve IDs of the tires 2 corresponding to the vehicle 1.

It is determined whether the received valve IDs are transmitted from the tire valves 4 operating in the estimated radio wave transmission mode based on, for example, the following determination conditions.
(I) The radio waves Sva that include the received valve IDs include the data (vehicle state information Dcr) corresponding to the estimated radio wave transmission mode.
(II) The radio waves Sva that include the received valve IDs are transmitted at the frequency of occurrence of transmission corresponding to the estimated radio wave transmission mode.
(III) The transmission interval of the radio waves Sva including the received valve IDs includes a transmission interval corresponding to the estimated radio wave transmission mode.

In Fig. 8A, when receiving valve IDs transmitted in the first transmission mode, the tire ID collection unit 21 stores the received valve IDs as candidate IDs. When receiving valve IDs transmitted in a radio wave transmission mode other than the first transmission mode, the tire ID collection unit 21 determines that the received valve IDs are less likely to be valve IDs of the tires 2 of the vehicle 1. In this case, the tire ID collection unit 21 does not obtain the received valve IDs. The tire ID collection unit 21 repeats the above operations to collect candidate IDs that are subject to registration.

Fig. 8B shows a case in which the vehicle 1 starts to travel, for example, after having been still for a short time. In this case, the tire valves 4 transmit the radio waves Sva in the radio wave transmission mode (first transmission mode or second transmission mode) executed before the vehicle 1 becomes still. The mode estimation unit 19 recognizes that the vehicle 1 has been shifted from a still state to a traveling state from the vehicle speed based on the vehicle speed information Sv and recognizes a short still time Tst from the measured value of the counter. Further, the mode estimation unit 19 estimates that the tire valves 4 are currently operating in the radio wave transmission mode (first transmission mode or second transmission mode) that had been executed before the vehicle 1 became still. Among the received valve IDs, the tire ID collection unit 21 obtains the valve IDs that were transmitted in the radio wave transmission mode before the vehicle 1 became still as the tire valve IDs of the tires 2 of the vehicle 1. Then, the tire ID collection unit 21 determines that the valve IDs transmitted in a radio wave transmission mode other than the radio wave transmission mode before the vehicle 1 became still are not the valve IDs of the tires 2 of the vehicle 1 and does not obtain such valve IDs.

Fig. 8C shows a case in which the vehicle 1 is still and the tires 2 are not rotating. In this case, the tire valves 4 operate in the third transmission mode and transmit the radio waves Sva. The mode estimation unit 19 recognizes that the vehicle speed is zero and that the vehicle 1 is still. Then, the mode estimation unit 19 estimates that the tire valves 4 are operating in the third transmission mode. Among the received IDs, the tire ID collection unit 21 obtains the valve IDs transmitted in the third transmission mode as the valve IDs of the tires 2 corresponding to the vehicle 1 and determines that the valve IDs transmitted in a radio wave transmission mode other than the third transmission mode are not the valve IDs of the tires 2 corresponding to the vehicle 1 and does not obtain such valve IDs.

Referring to Fig. 7, after completing the temporary registration (first phase), the tire ID determination unit 22 starts to narrow down the candidate IDs during the formal registration period M, which is set to a predetermined time (for example, two minutes). In this case, the tire ID determination unit 22 checks whether or not to receive the temporarily registered candidate IDs again during a first formal registration period M, which is a second phase (second process step) of the ID registration operation. For example, the tire ID determination unit 22 narrows down the candidate IDs by eliminating the valve IDs that are not received again during the formal registration period M from the candidate IDs. It is preferred that the formal registration period M be set, for example, separately from the temporary registration period N.

It is preferred that the tire ID determination unit 22 obtain valve IDs in the same manner as when collecting candidate IDs. That is, during the formal registration period M, the tire ID determination unit 22 obtains the valve IDs received in the estimated radio wave transmission mode as new candidate IDs and does not obtain the valve IDs received in a radio wave transmission mode other than the estimated radio wave transmission mode.

The valve IDs eliminated from the registration candidates are left in the memory 15 and set as non-candidate IDs when the values of the candidate ID flags are changed. As described above, a valve ID that is not received during the temporary registration period N and received during the formal registration period M for the first time, such as "ID13" shown in Fig. 7, may be added as a candidate ID. When the first formal registration period M ends, the tire ID determination unit 22 ends the formal registration operation when the number of valve IDs has been narrowed down to a predetermined number (for example, a total of five traveling and spare tires).

When the first formal registration period M ends, the tire ID determination unit 22 re-executes the formal registration when the number of valve IDs has not been narrowed down to the predetermined number (for example, a total of five traveling and spare tires). That is, the tire ID determination unit 22 continues to narrow down the valve IDs in a second formal registration period L, which is a third phase (third process step) of the ID registration operation. The valve IDs eliminated in the first formal registration, such as "ID19" shown in Fig. 7, are not added as candidate IDs even when the same valve ID is received again in the second formal registration. The tire ID determination unit 22 repeats this formal registration in each phase until the number of valve IDs is narrowed down to the predetermined number.

When the candidate IDs are narrowed down to the predetermined number (for example, a total of five traveling and spare tires), the tire ID determination unit 22 writes the candidate IDs to the memory 15 as the valve IDs of the tires 2 corresponding to the vehicle 1. Thus, the valve IDs of the vehicle 1 are registered (or updated) to the TPMS receiver 12. It is preferred that the TPMS receiver 12 perform the ID registration operation of the tires 2 corresponding to the vehicle 1 whenever, for example, the ignition switch of the vehicle 1 is turned on to start driving the vehicle 1.

The first embodiment has the advantages described below.
(1) The TPMS receiver 12 estimates the radio wave transmission mode of the tire valves 4 of the vehicle 1 and determines that the valve IDs transmitted from the tire valves 4 operating in one of the radio wave transmission modes that has been estimated are valve IDs of the tires 2 corresponding to the vehicle 1. Thus, even when valve IDs are transmitted from other vehicles that surround the vehicle 1, the valve IDs transmitted from the tire valves 4 of the vehicle may be determined and registered to the TPMS receiver 12. This allows the candidates of the valve IDs of the tires 2 corresponding to the vehicle 1 to be narrowed down quickly. Thus, the valve IDs of the tires 2 corresponding to the vehicle 1 may be quickly registered to the TPMS receiver 12.
(2) The mode estimation unit 19 measures the still time Tst of the vehicle 1 and estimates the radio wave transmission mode of the tire valves 4 taking the still time Tst into account. The tire valves 4 of the present embodiment operate in the first transmission mode when the vehicle 1 starts to travel after having been still for a long time. Even in such a case, the mode estimation unit 19 may correctly estimate the operation (first radio wave transmission mode) of the tire valves 4 taking the still time Tst into account.
(3) When the radio wave transmission mode is shifted from the still radio wave transmission mode to the traveling radio wave transmission mode, the tire valves 4 operate in a radio wave transmission mode that is in accordance with the preceding still time Tst and the traveling radio wave transmission mode before the vehicle became still. This allows for correct estimation of the radio wave transmission mode of the tire valves 4 that is in accordance with the traveling situation of the vehicle 1.
(4) The tire valves 4 select the first transmission mode or the second transmission mode when the vehicle speed of the vehicle 1 corresponds to a traveling state. The tire valves 4 select the third transmission mode, in which the radio waves are transmitted less frequently than the first and second transmission modes, when the vehicle speed of the vehicle 1 corresponds to a still state. Thus, when the vehicle 1 is traveling, a large number of radio waves Sva are transmitted from the tire valves 4. This is advantageous for quickly completing registration of valve IDs to the TPMS receiver 12. When the vehicle 1 is still, the number of the radio waves Sva transmitted from the tire valves 4 decreases. This is advantageous for prolonging the life of the power supply of the tire valves 4.
(5) The TPMS receiver 12 specifies the valve IDs of the vehicle 1 by collecting all of the valve IDs that are potential candidates for the valve IDs of the vehicle 1 in the phase of the temporary registration period N and narrowing down the candidate IDs by subsequently repeating the phases of the formal registration periods M and L. This allows every one of the valve IDs of the vehicle 1 to be registered to the TPMS receiver 12.

### Second Embodiment

A second embodiment will now be described with reference to Fig. 9. The second embodiment modifies the duration of each phase described in the first embodiment. Thus, like or same reference numerals are given to those components that are the same as the corresponding components of the first embodiment. Such components will not be described in detail, and the description focuses on the differences from the first embodiment.

Referring to Fig. 9, the ID registration unit 20 adjusts the duration of each of the phases (temporary and formal registration periods) in accordance with the radio wave transmission mode of the tire valves 4 that is estimated by the mode estimation unit 19. For example, the ID registration unit 20 sets the phase time of the second transmission mode to be shorter than that of the third transmission mode and sets the phase time of the first transmission mode to be shorter than that of the second transmission mode. The tire valves 4 transmit a larger number of radio waves Sva when operating in the second transmission mode than when operating in the third transmission mode, and the tire valves 4 transmit a larger number of radio waves Sva when operating in the first transmission mode than when operating in the second transmission mode. Thus, even if the phase time is shortened when a larger number of radio waves Sva are transmitted, the necessary valve IDs may be collected.

The tire ID collection unit 21 sets the phase time of the temporary registration period N for valve IDs to a duration that is in accordance with the estimation result of the mode estimation unit 19 when the temporary registration is started. If the temporary registration is started when the vehicle 1 starts to travel, the tire valves 4 operate in the first or second transmission mode. Thus, when it is estimated that the tire valves 4 are operating in, for example, the first transmission mode, the temporary registration period N is set to a phase time Tk1, which is the shortest. When it is estimated that the tire valves 4 are operating in, for example, the second transmission mode, the temporary registration period N is set to a phase time Tk2, which is longer than the phase time Tk1. Accordingly, the phase time of the temporary registration period N may be set to a suitable and efficient duration in accordance with the radio wave transmission mode that the tire valves 4 are currently in.

In the same manner, the tire ID determination unit 22 sets the phase time of each of the formal registration periods M and L of valve IDs to a duration that is in accordance with the estimation result of the mode estimation unit 19 when the formal registration is started. Thus, when it is estimated that the tire valves 4 are operating in, for example, the first transmission mode, the formal registration period M or L is set to the phase time Tk1, which is the shortest. When it is estimated that the tire valves 4 are operating in, for example, the second transmission mode, the formal registration period N is set to the phase time Tk2. When it is estimated that the tire valves 4 are operating in, for example, the third transmission mode, each of the formal registration periods M and N is set to a phase time Tk3, which is the longest. Accordingly, the phase time of each of the formal registration periods M and L may be set to an efficient duration in accordance with the radio wave transmission mode that the tire valves 4 are currently in.

The phase time Tk1 may be set to different values between the temporary registration and the formal registration. In one example, the phase time Tk1 of the temporary registration period N may be longer than the phase time Tk1 of each of the formal registration periods M and L. The same applies to the phase times Tk2 and Tk3.

In addition to advantages (1) to (5) of the first embodiment, the second embodiment has the advantages described below.
(6) The phase times of the temporary registration period N and each of the formal registration periods M and L are set to durations that are in accordance with the estimation result of the mode estimation unit 19. This allows the phase time to be set to an optimal duration that is in accordance with the radio wave transmission mode of the tire valves 4. Thus, the phase time may be set efficiently. This is further advantageous for quickly registering valve IDs to the TPMS receiver 12.
(7) When the tire valves 4 perform the first transmission mode having the high-frequency of occurrence of transmission and the second transmission mode having the middle-frequency of occurrence of transmission, the phase times of the temporary registration period N and each of the formal registration periods M and L are shortened. This allows for quick registration of valve IDs. The shortened phase time increases the elimination ratio of the valve IDs of other vehicles. Since this reduces the number of times the phases are repeated, the time for valve ID registration is shortened. Further, the valve IDs of other vehicles are less likely to be registered incorrectly.

The above embodiments may be modified as follows.

In each of the embodiments, a variety of triggers may be used to switch the TPMS receiver 12 to a registration mode, whether directly or indirectly.

In each of the embodiments, the duration of each of the phases (process steps) may be set to the same.

In each of the embodiments, an interruption period that temporarily stops the registration operation may be arranged between the phases.

In each of the embodiments, the first phase (temporary registration period N) of the ID registration operation may be set to a first time when the vehicle 1 is traveling, for example, at a speed of 0 to 10 km/h and may be set to a second time when the vehicle 1 is traveling, for example, at a speed of 10 to 20 km/h. That is, the phase time may be set to be variable in accordance with various traveling conditions.

In each of the embodiments, the first phase (temporary registration period N) of the ID registration operation may end when, for example, the total number of candidate IDs reaches a predetermined number.

In each of the embodiments, the first phase and the second phase do not have to be separate. Instead, the first phase and the second phase may be integrated as a single process period. That is, a certain valve ID may be obtained as a candidate ID, and candidate IDs may be narrowed down when the valve ID is received in the same phase.

In each of the embodiments, the process of the formal registration is not limited to a process of narrowing down candidate IDs by repeating phases. For example, a valve ID that is received for the first time in a single phase at a predetermined number of times may be formally registered as the valve ID of the tire 2 corresponding to the vehicle 1.

In each of the embodiments, when, for example, the necessary number of valve IDs that have been narrowed down are received a predetermined number of times, the valve IDs may be determined as valve IDs of the tires 2 corresponding to the vehicle 1.

In each of the embodiments, a valve ID may be registered when the valve ID is received again after switching the ignition switch from off to on. In this case, a valve ID may be registered when the valve ID is received again a number of times.

In each of the embodiments, the radio waves Sva transmitted at a number of times in the high-frequency of occurrence of transmission or the middle-frequency of occurrence of transmission do not all need to have the same contents. Modifications may be made so that, for example, signal information differs between the first radio wave Sva and the second and subsequent radio waves Sva.

In each of the embodiments, the types of radio wave transmission modes of the tire valve 4 are not limited to three. There may be two or four or more types of radio wave transmission modes of the tire valve 4.

In each of the embodiments, the content of a radio wave transmission mode may be changed to a variety of contents such as a frequency of occurrence of transmission, a data content, and a transmission cycle of the radio wave Sva.

In each of the embodiments, the method for estimating a radio wave transmission mode may be changed to any method as long as the method monitors whether the vehicle 1 is in a traveling state or in a still state.

In each of the embodiments, the ID registration operation for the traveling tire and the ID registration operation for the spare tire may be performed in different processes, respectively.

In each of the embodiments, the valve ID registration may be changed to any mode as long as the process is performed in a plurality of separate phases.

In each of the embodiments, the valve ID registration is not limited to registration of valve IDs by separating phases. Instead, a variety of registration methods may be used for the valve ID registration.

## Claims

1. A tire valve ID registration system comprising:
tire valves arranged in tires, wherein each of the tire valves is configured to transmit a radio wave, the radio wave including a unique valve ID and tire pressure data; and
a receiver arranged in a vehicle, wherein the receiver is configured to receive the radio wave transmitted from each of the tire valves and register the valve ID to monitor pressure of each of the tires; wherein
each of the tire valves is configured to selectively execute one of a plurality of radio wave transmission modes in accordance with whether the vehicle is in a traveling state or a still state, and
the receiver includes:
a mode estimation unit configured to monitor whether the vehicle is in the traveling state or the still state and estimate the radio wave transmission mode that the tire valves are currently in; and
an ID registration unit configured to determine that the valve IDs transmitted from the tire valves in one of the radio wave transmission modes estimated by the mode estimation unit are valve IDs of the vehicle and register the determined valves ID to the receiver.

2. The tire valve ID registration system according to claim 1, wherein
when the vehicle shifts from the still state to the traveling state, each of the tire valves is configured to operate in one of the radio wave transmission modes that is in accordance with a still time immediately before the shifting, and
the mode estimation unit is configured to measure the still time of the vehicle and estimate a radio wave transmission mode of the tire valves taking the still time into account.

3. The tire valve ID registration system according to claim 2, wherein when the vehicle shifts from the still state to the traveling state, each of the tire valves is configured to operate in one of the radio wave transmission modes that is in accordance with the still time immediately before the shifting and the radio wave transmission mode executed before the vehicle became still.

4. The tire valve ID registration system according to any one of claims 1 to 3, wherein each of the tire valves is configured to execute one of the radio wave transmission modes in which a frequency of occurrence of radio wave transmission is high when a vehicle speed of the vehicle corresponds to the traveling state and to execute one of the radio wave transmission modes in which a frequency of occurrence of radio wave transmission is low when the vehicle speed of the vehicle corresponds to the still state.

5. The tire valve ID registration system according to any one of claims 1 to 4, wherein the ID registration unit is configured to perform an ID registration process in each phase having a predetermined duration, and
the ID registration unit is configured to specify the valve IDs of the vehicle by collecting all of valve IDs received by the receiver in a first phase as candidate IDs and narrowing down the candidate IDs to a necessary number in a subsequent phase.

6. The tire valve ID registration system according to claim 5, wherein the ID registration unit is configured to change a duration of the phase in accordance with the radio wave transmission mode estimated by the mode estimation unit.

7. The tire valve ID registration system according to any one of claims 1 to 6, wherein the still state of the vehicle includes a parked state, a stopped state, and a low-speed traveling state in which the vehicle is traveling at a vehicle speed lower than a predetermined vehicle speed.

8. The tire valve ID registration system according to claim 3, wherein each of the tire valves is configured to:
execute a first radio wave transmission mode when the vehicle shifts from the still state to the traveling state and the still time immediately before the shifting is longer than or equal to a predetermined time;
execute a second radio wave transmission mode in which the radio wave is transmitted a number of times less than in the first radio wave transmission mode when a number of radio wave transmissions in the first radio transmission mode reaches a specified value; and
execute a third radio wave transmission mode in which the radio wave is transmitted a number of times less than in the second radio wave transmission mode when the vehicle is in the still state.
